# FASCICULE DE BREVET EUROPEEN

(11) **EP 3 647 192 B1**
(45) Date de publication et mention de la délivrance du brevet: **17.02.2021**
(21) Numéro de dépôt: 19195860.2
(22) Date de dépôt: 06.09.2019
(51) Int. Cl.: B64C 27/82, B64D 43/00, G01D 7/04

(54) **PROCEDE ET DISPOSITIF D'AIDE AU PILOTAGE D'UN GIRAVION HYBRIDE MUNI D'UN ROTOR DE SUSTENTATION ET D'AU MOINS UN ROTOR PROPULSIF GENERANT UNE POUSSEE**
PILOTENASSISTENZVERFAHREN UND -VORRICHTUNG EINES HYBRID-DREHFLÜGELFLUGZEUGS, DAS MIT EINEM AUFTRIEBSROTOR UND MINDESTENS EINEM SCHUBERZEUGENDEN VORTRIEBSROTOR AUSGESTATTET IST
METHOD AND DEVICE FOR ASSISTED PILOTING OF A HYBRID ROTORCRAFT PROVIDED WITH A LIFT ROTOR AND AT LEAST ONE PROPULSION ROTOR GENERATING THRUST

(30) Priorité: 26.09.2018 FR 1800994
(43) Date de publication de la demande: 06.05.2020
(73) Titulaire: Airbus Helicopters, 13725 Marignane Cedex (FR)
(72) Inventeur: CERQUEIRA, Stéphane, 13090 Aix en Provence (FR); DUMUR, Guillaume, 13300 Salon de Provence (FR); LEONARD, Anthony, 13100 Aix en Provence (FR)
(74) Mandataire: GPI & Associés

(56) Documents cités:
- EP-A1- 1 562 022
- EP-A1- 2 258 615
- FR-A1- 2 756 256

## Description

La présente invention concerne un procédé et un dispositif d'aide au pilotage d'un giravion hybride muni d'un rotor de sustentation et d'au moins un rotor propulsif générant une poussée.

Un hélicoptère comporte au moins une voilure tournante mise en rotation par une installation motrice. Cette installation motrice peut comprendre au moins un moteur et au moins une boîte de transmission de puissance. Les limitations d'un moteur et les limitations d'une boîte de transmission de puissance peuvent permettre de définir divers régimes de fonctionnement et notamment:
- le régime de décollage défini par une puissance maximale au décollage PMD et une durée d'utilisation prédéterminée de cette puissance maximale au décollage,
- le régime maximal continu défini par une puissance maximale en continu PMC correspondant par exemple à environ 90% de la puissance maximale au décollage PMD et par une durée d'utilisation de cette puissance maximale en continu généralement illimitée,
- le régime de puissance étendue défini par une puissance étendue sensiblement équivalente voire égale à la puissance maximale au décollage PMD et par une durée prédéterminée d'utilisation de cette puissance étendue,
- un régime transitoire défini par une puissance maximale en transitoire PMT.

Sur un giravion multimoteur, l'enveloppe de fonctionnement englobe aussi des régimes de surpuissance d'urgence, uniquement utilisés lorsque l'un des moteurs est en panne :
- le premier régime d'urgence, dénommé parfois « OEI 30" », défini par une puissance de super urgence PSU souvent égale environ à 112% à 120% de la puissance maximale au décollage PMD et par une durée d'utilisation de cette puissance de super urgence PSU prédéterminée, la puissance de super urgence étant classiquement utilisable trois fois pendant un vol,
- le deuxième régime d'urgence, dénommé parfois « OEI 2' », ce deuxième régime d'urgence étant défini par une puissance maximale d'urgence PMU égale environ à 105% à 112% de la de la puissance maximale au décollage PMD et par une durée d'utilisation de cette puissance maximale d'urgence PMU prédéterminée ;
- le troisième régime d'urgence, dénommé parfois « OEI cont », ce troisième régime d'urgence étant défini par une puissance intermédiaire d'urgence PIU sensiblement égale à la puissance maximale au décollage PMD et par une durée d'utilisation illimitée de cette puissance intermédiaire d'urgence PIU pour le reste du vol après la panne du turbomoteur.

Le motoriste définit en accord avec l'hélicoptériste des limitations de chaque moteur permettant d'obtenir les puissances PMC, PMD, PMT, PSU, PMU, PIU correspondant à chaque régime précité et faisant état d'une durée de vie acceptable. Sur un turbomoteur, ces limites sont généralement surveillées par l'intermédiaire de trois paramètres de surveillance du turbomoteur : la vitesse de rotation du générateur de gaz du turbomoteur, le couple moteur et la température des gaz à l'entrée de la turbine libre basse pression du turbomoteur respectivement dénommés Ng, Cm et T45 par l'homme du métier. Si le turbomoteur comporte un étage de turbine haute pression, il est aussi possible d'utiliser la température des gaz à l'entrée de la turbine haute pression dénommée TET.

Ainsi, pour chaque régime de l'enveloppe de fonctionnement du moteur, le motoriste établit des limites pour chaque paramètre de surveillance du moteur.

Par exemple, pour un aéronef ayant un unique turbomoteur le motoriste détermine:
- des limites en température *T*4_{lim*PMC*}, *T*4_{lim*PMD*} et *T*4_{lim*PMT*} correspondant à la température maximale des gaz à l'entrée de la turbine libre basse pression du moteur lorsque ce moteur développe respectivement la puissance maximale continue ainsi que la puissance maximale au décollage et la puissance maximale en transitoire, ces limites en température étant variables en fonction des conditions extérieures,
- des limites de vitesse de rotation *NG*_{lim*PMC*}, *NG*_{lim*PMD*} et *NG*_{lim*PMT*} correspondant à la vitesse de rotation du générateur de gaz du moteur lorsque ce moteur développe respectivement la puissance maximale continue ainsi que la puissance maximale au décollage et la puissance maximale en transitoire, ces limites de vitesse de rotation étant variables en fonction des conditions extérieures,
- des limites en couple *TQ*_{lim*PMC*}, *TQ*_{lim*PMD*} et *TQ*_{lim*PMT*} correspondant au couple exercé sur l'arbre de sorite du moteur lorsque ce moteur développe respectivement la puissance maximale continue ainsi que la puissance maximale au décollage et la puissance maximale en transitoire, ces limites en couple étant variables en fonction des conditions extérieures.

Ces différentes limites sont établies par le motoriste conjointement avec le constructeur de l'aéronef, sous la forme de tableaux, de base de données ou d'équations par exemple.

Pour contrôler ces limites, l'aéronef peut comprendre de multiples indicateurs, chaque indicateur fournissant une information relative à un unique paramètre.

Pour limiter le nombre d'indicateurs, un instrument de première limitation, en abrégé « IPL » peut être utilisé.

Le document FR 2 756 256 suggère de présenter sur une échelle graduée en équivalent de pas collectif des pales du rotor principal la marge de puissance disponible pour le moteur avant d'atteindre une de ces limites, l'échelle défilant devant un index représentatif du pas collectif courant desdites pales. Par exemple, l'index est en vis-à-vis d'une première graduation, la limite du paramètre limitant le moteur à une puissance donnée étant en vis-à-vis d'une deuxième graduation. Le pilote connaît alors la marge de pas collectif à sa disposition avant d'atteindre ladite puissance donnée.

Le document EP 1562022 est aussi connu.

Par ailleurs, un autre type de giravion est qualifié par commodité « giravion hybride » dans le cadre de l'invention. Un giravion hybride comprend un fuselage portant au moins une voilure tournante munie d'un rotor de sustentation. Le rotor de sustentation participe au moins à la sustentation de l'aéronef voire à son avancement. En effet, le rotor de sustentation génère un effort de portance qui peut être décomposé en une force de sustentation et une force de propulsion suivant son inclinaison.

Pour atteindre une grande vitesse d'avancement, le giravion hybride comprend de plus au moins un rotor propulsif générant une poussée.

Par exemple, le giravion hybride peut être pourvu de deux rotors propulsifs dits latéraux et agencés de part et d'autre du fuselage.

Les deux rotors propulsifs et le rotor de sustentation sont mis en rotation par une installation motrice. Cette installation motrice comprend au moins un moteur et un système mécanique d'interconnexion entre les éléments tournants. Un tel système mécanique d'interconnexion peut comprendre au moins une boîte de transmission de puissance, au moins un arbre et des organes d'accouplement...

A l'instar d'un hélicoptère, le giravion hybride peut disposer d'un premier moyen de commande et d'un deuxième moyen de commande pour contrôler respectivement collectivement et cycliquement le pas des pales du rotor de sustentation.

De plus, le giravion hybride inclut au moins un moyen de commande de la poussée apte à modifier collectivement et d'une même quantité le pas des pales des rotors propulsifs.

Des fonctions anticouple et de contrôle de direction peuvent être réalisées par l'utilisation d'une commande modifiant différemment les poussées exercées par les rotors propulsifs, par exemple via la mise en œuvre d'un palonnier par le pilote.

Le contrôle du pas des pales du rotor de sustentation et des rotors propulsifs a de fait un impact sur le fonctionnement de l'installation motrice et notamment des moteurs.

Dès lors, les instruments de première limitation d'hélicoptère ne permettent pas de réaliser un dispositif d'aide au pilotage d'un giravion hybride possédant non seulement un rotor de sustentation mais aussi au moins un rotor propulsif.

Le document FR 2946322 décrit un procédé d'aide au pilotage pour un aéronef comprenant un rotor de sustentation et deux rotors propulsifs. Ce procédé comporte les étapes de détermination d'un pas moyen maximal des rotors propulsifs en fonction d'un gradient de puissance et d'affichage sur un indicateur dédié de ce pas moyen maximal sur une échelle graduée en pas balayée par une aiguille.

Cet enseignement est intéressant mais il revient à utiliser sur un giravion hybride de multiples indicateurs et notamment un indicateur dédié aux rotors propulsifs.

De même, le document FR2973340 suggère un indicateur affichant un diagramme qui présente un pas collectif courant de chaque rotor propulsif et une courbe limite de puissance.

La présente invention a alors pour objet de proposer un dispositif d'aide au pilotage permettant de faciliter le pilotage d'un giravion hybride afin d'optimiser ses performances et/ou sa sécurité.

L'invention vise ainsi notamment un procédé pour faciliter le pilotage d'un giravion hybride, ledit giravion hybride comprenant un rotor de sustentation muni d'une pluralité de premières pales ayant un premier pas variable au moins pour participer à la sustentation du giravion hybride, le giravion hybride ayant un système propulsif ayant au moins un rotor propulsif muni d'une pluralité de deuxièmes pales ayant un deuxième pas variable au moins pour participer à l'avancement du giravion hybride, ledit giravion hybride ayant une installation motrice pourvue d'au moins un moteur fonctionnant selon au moins un régime pour mettre en rotation ledit rotor de sustentation et chaque rotor propulsif dudit au moins un rotor propulsif, ledit au moins un régime étant associé à au moins une limite pour au moins un paramètre de surveillance de l'installation motrice.

Ce procédé comporte les étapes de :
- pour au moins un dit régime dit régime surveillé, détermination avec un calculateur embarqué d'une première marge de puissance de l'installation motrice disponible pour le rotor de sustentation et d'au moins une deuxième marge de puissance de l'installation motrice disponible pour ledit au moins un rotor propulsif,
- affichage dans un unique indicateur d'une ligne séparant un premier côté et un deuxième côté de l'indicateur,
- affichage dans ledit unique indicateur d'un premier index pointant sur ladite ligne pour illustrer un point de fonctionnement courant du rotor de sustentation et affichage dans ledit unique indicateur d'un deuxième index pointant sur ladite ligne pour illustrer un point de fonctionnement courant dudit au moins un rotor propulsif,
- pour chaque régime surveillé, affichage sur commande dudit calculateur embarqué d'un premier symbole séparé du premier index par une première distance illustrant la première marge de puissance à ce régime surveillé, et affichage sur commande dudit calculateur embarqué d'un deuxième symbole qui comprend au moins un pointeur séparé du deuxième index par une deuxième distance illustrant ladite au moins une deuxième marge de puissance à ce régime surveillé.

L'expression « première marge de puissance de l'installation motrice disponible pour le rotor de sustentation » désigne une marge de puissance de l'installation motrice utilisable par le rotor de sustentation. De même, l'expression « deuxième marge de puissance de l'installation motrice disponible pour ledit au moins un rotor propulsif » désigne une marge de puissance de l'installation motrice utilisable par au moins un rotor propulsif.

Par suite, ce procédé est applicable à un giravion ayant de multiples rotors. En particulier, le giravion peut comprendre au moins un rotor de sustentation et au moins un rotor propulsif, et par exemple deux rotors propulsifs ou plus. Chaque rotor propulsif peut être un rotor propulsif en traction ou en propulsion. Chaque rotor propulsif peut être un rotor latéral à savoir agencé latéralement par rapport à un fuselage.

La pluralité de régimes peut comprendre au moins un régime des régimes suivants : un régime de décollage, un régime maximal continu, un régime de puissance étendue, un régime transitoire, un premier régime d'urgence, un deuxième régime d'urgence et un troisième régime d'urgence. Les paramètres de surveillance peuvent inclure un couple moteur, une température et/ou une vitesse de rotation. Par exemple, pour un turbomoteur les paramètres de surveillance peuvent inclure au moins un paramètre à choisir dans une liste incluant la vitesse de rotation d'un générateur de gaz du turbomoteur, le couple moteur du turbomoteur et la température des gaz à l'entrée d'une turbine libre du turbomoteur. Il est par exemple possible de mesurer et d'utiliser le couple exercé sur une boîte de transmission de puissance principale de l'installation motrice qui est interposée entre un moteur et un rotor, pour déterminer le couple moteur.

Dès lors, ce procédé propose d'utiliser un seul indicateur qui présente un symbole commun à des équipements de diverses natures et commandés de diverses manières. En particulier, la ligne affichée par l'indicateur peut représenter un axe de puissance aussi bien pour le rotor de sustentation que pour le système propulsif. Cette ligne peut être dépourvue de graduation ou peut posséder des graduations. Eventuellement, la ligne peut porter des graduations différentes du premier côté et du deuxième coté et spécifiques respectivement au rotor de sustentation et au système propulsif.

Ainsi, le premier côté, le deuxième côté et la ligne forment conjointement un seul et même indicateur, et non pas deux indicateurs différents.

Selon ce procédé, un calculateur embarqué calcule des marges de puissance disponibles pour le rotor de sustentation et le ou les rotors propulsifs. Cette étape permet d'évaluer la réserve de puissance pouvant être utilisée par le rotor de sustentation et la réserve de puissance pouvant être utilisée par le système propulsif et donc par le ou les rotors propulsifs avant d'atteindre une limite du giravion, à savoir notamment une limite de l'installation motrice mettant en rotation le rotor de sustentation et chaque rotor propulsif.

Dès lors, le calculateur embarqué transmet un signal à un écran pour illustrer ces marges de puissance rotor et de rotor propulsif au travers de symboles divers sur le même indicateur au regard d'une même ligne.

Ainsi, un premier index représentant un point de fonctionnement courant du rotor de sustentation est affiché, et par exemple illustre la puissance consommée par le rotor de sustentation à un instant courant. Ce premier index pointe la ligne en étant accolé à la ligne ou dirigée vers la ligne.

Un deuxième index représentant un point de fonctionnement courant du système propulsif est aussi affiché, et par exemple illustre la puissance consommée par les rotors propulsifs à un instant courant. Ce deuxième index pointe la ligne en étant accolé à la ligne ou dirigé vers la ligne.

En outre, pour chaque régime surveillé, le calculateur contrôle l'écran pour afficher un symbole permettant de visualiser la marge de puissance disponible. Dès lors, un symbole dit « premier symbole » est positionné, ce premier symbole étant porteur de la première marge de puissance. Le premier symbole pointe la ligne en étant accolé à la ligne ou dirigé vers la ligne. De même, un symbole dit « deuxième symbole » représentant la limite de pas de rotor propulsif est positionné, ce deuxième symbole étant porteur d'une deuxième marge de puissance, et par exemple au moins de la deuxième marge de puissance la plus petite. Le deuxième symbole pointe la ligne en étant accolé à la ligne ou dirigé vers la ligne.

Par exemple, trois premiers symboles et trois deuxièmes symboles sont utilisés pour illustrer des limites à ne pas dépasser pour respecter les conditions prédéterminées du régime de décollage, du régime maximal continu et du régime de puissance étendue décrits précédemment.

Ce procédé permet donc à un pilote d'observer un unique indicateur pour contrôler des organes qui sont non seulement différents, le rotor de sustentation et les rotors propulsifs, mais aussi commandés par des organes eux aussi différents.

Le procédé peut de plus comporter une ou plusieurs des caractéristiques qui suivent.

Selon un aspect, la ligne de l'indicateur peut être un segment de droite, un arc de cercle..

Selon un aspect, le premier index et le premier symbole associés à chaque régime surveillé peuvent être positionnés du premier côté, le deuxième index et le deuxième symbole associé à chaque régime surveillé étant positionnés du deuxième côté.

Dès lors, l'unique indicateur inclut une ligne qui représente un axe central, éventuellement un axe de puissance et gradué. De part et d'autre de cette ligne, des symboles sont générés et affichés pour illustrer la première marge de puissance et la deuxième marge de puissance.

Selon un aspect, l'étape de détermination avec le calculateur embarqué d'une première marge de puissance comporte les étapes suivantes et à un régime surveillé donné :
- détermination d'une marge de couple moteur pour chaque moteur dudit au moins un moteur,
- détermination d'une marge de couple intermédiaire entre une limite de couple rotor d'un arbre rotor mettant en rotation le rotor de sustentation et un couple courant exercé sur cet arbre rotor, la limite de couple rotor pouvant être une limite prédéterminée,
- détermination d'un minimum de marge de couple rotor correspondant au minimum entre la marge de couple moteur et la marge de couple intermédiaire,
- détermination de la première marge de puissance égale au minimum de marge de couple rotor multiplié par la vitesse de rotation d'un arbre de sortie moteur mis en rotation par le moteur présentant la plus petite marge de couple.

L'expression « arbre de sortie moteur » peut couvrir un organe de la chaine dynamique allant d'un moteur vers un rotor et notamment un arbre de puissance du moteur ou encore un arbre de l'installation motrice mis en mouvement par un tel arbre de puissance et par exemple un arbre interposé entre une boîte de transmission de puissance et le moteur voire un arbre d'entrée d'une telle boîte de transmission de puissance.

Eventuellement, une étape de détermination d'une marge de couple moteur pour chaque moteur peut comporter les étapes suivantes :
- détermination d'une marge de surveillance de chaque paramètre de surveillance du moteur entre une valeur courante de ce paramètre de surveillance et une limite prédéterminée de ce paramètre de surveillance au régime surveillé,
- pour chaque paramètre de surveillance qui n'est pas le couple moteur et donc qui n'est pas déjà exprimé en unité de couple moteur, transformation de la marge de surveillance en une marge exprimée en unité de couple moteur, la marge de couple moteur étant la marge exprimée en unité de couple moteur la plus faible.

Chaque limite prédéterminée peut être variable en vol, par exemple en fonction de la pression extérieure et de la température extérieure, ou peut être fixe.

La transformation de chaque marge de surveillance en une marge exprimée en unité de couple moteur peut être réalisée en appliquant des lois mathématiques mémorisées établies par exemple par essais et/ou simulation, à l'aide de tableaux de valeurs... La marge de surveillance du couple moteur étant de fait exprimée en unité de couple moteur, cette marge de surveillance n'a pas besoin d'être transformée pour être comparée aux autres marges de surveillance.

Selon une première alternative, l'étape de détermination d'au moins une deuxième marge de puissance peut comporter les étapes suivantes :
- détermination d'une marge de couple moteur pour chaque moteur dudit au moins un moteur,
- détermination pour chaque rotor propulsif d'une marge de couple de calcul entre une limite de couple de rotor propulsif d'un arbre de rotor propulsif mettant en rotation ce rotor propulsif et un couple courant exercé sur cet arbre de rotor propulsif,
- détermination d'un minimum de marge de couple de rotor propulsif correspondant au minimum entre la marge de couple moteur et chaque marge de couple de calcul,
- détermination d'une deuxième marge de puissance égale au minimum de marge de couple de rotor propulsif multiplié par la vitesse de rotation d'un arbre de sortie moteur mis en rotation par le moteur présentant la plus petite marge de couple

Quel que soit le nombre de rotor(s) propulsif(s), une seule deuxième marge de puissance est selon cette première alternative calculée, le deuxième index étant uniquement positionné en fonction de cette deuxième marge de puissance.

Selon une deuxième alternative, l'étape de détermination d'au moins une deuxième marge de puissance peut comporter les étapes suivantes :
- détermination d'une marge de couple moteur pour chaque moteur dudit au moins un moteur,
- détermination pour chaque rotor propulsif d'une marge de couple de calcul entre une limite de couple de rotor propulsif d'un arbre de rotor propulsif mettant en rotation ce rotor propulsif et un couple courant exercé sur cet arbre de rotor propulsif,
- détermination pour chaque rotor propulsif d'un minimum de marge de couple de rotor propulsif correspondant au minimum entre la marge de couple moteur et la marge de couple de calcul associée à ce rotor propulsif,
- détermination d'une deuxième marge de puissance par rotor propulsif égale au minimum de marge de couple de rotor propulsif de ce rotor propulsif multiplié par la vitesse de rotation d'un arbre de sortie moteur mis en rotation par le moteur présentant la plus petite marge de couple.

Eventuellement, le deuxième index comporte un unique pointeur positionné en fonction de la deuxième marge de puissance la plus petite, ou un pointeur par rotor propulsif positionné en fonction de la deuxième marge de puissance correspondante.

Selon une première réalisation, ledit premier index et ledit deuxième index peuvent être fixes par rapport à la ligne, ledit premier symbole et ledit deuxième symbole étant mobiles par rapport à la ligne.

Selon un aspect, ledit premier index et ledit deuxième index peuvent être alignés, ledit premier index et ledit deuxième index étant symétriques par rapport à la ligne

Selon cette première réalisation, les index représentant les points de fonctionnement courants des pales du rotor de sustentation et des rotors propulsifs sont alignés et fixes. Les premiers symboles et les deuxièmes symboles coulissent le long de la ligne en fonction de l'évolution des diverses marges.

L'identification visuelle des marges disponibles est alors facilitée.

A titre illustratif, si un pilote augmente la poussée générée par les rotors propulsifs, la marge de puissance de l'installation motrice au regard d'un régime diminue. Chaque deuxième symbole se déplace selon une direction allant du deuxième symbole au deuxième index. De même, chaque premier symbole se déplace selon une direction allant du premier symbole au premier index.

Selon un deuxième mode de réalisation, le premier index et le deuxième index peuvent être mobiles par rapport à la ligne, ledit premier symbole et ledit deuxième symbole étant fixes par rapport à la ligne.

Selon ce deuxième mode de réalisation, les symboles illustrant les limites sont fixes mais les index coulissent par rapport à la ligne.

Là aussi l'identification visuelle des marges disponibles est alors facilitée.

Eventuellement, pour un même régime surveillé ledit premier symbole et ledit deuxième symbole peuvent être alignés, ledit premier symbole et ledit deuxième symbole étant symétriques par rapport à la ligne.

L'identification visuelle des marges disponibles est alors optimisée.

Selon un aspect, ledit au moins un rotor propulsif pouvant comprendre plusieurs rotors propulsifs, ladite au moins une marge de rotor propulsif peut inclure une marge de rotor propulsif par rotor propulsif, ledit deuxième index comporte un pointeur par rotor propulsif séparé du deuxième symbole par une distance illustrant la marge de rotor propulsif correspondante.

Dès lors, le deuxième index est scindé en plusieurs parties distinctes. Il devient alors possible de faire la différence entre les rotors propulsifs pour par exemple prendre plus facilement en considération un rotor propulsif apte à inverser le sens de la poussée exercée.

Selon un aspect, ledit premier symbole et ledit deuxième symbole ont des formes identiques.

Selon un aspect, ledit premier symbole et ledit deuxième symbole sont au moins temporairement dissymétriques par rapport à la ligne.

Outre un procédé, l'invention vise un giravion hybride. Ce giravion hybride comprend un rotor de sustentation, ledit giravion rotor de sustentation étant muni d'une pluralité de premières pales ayant un premier pas variable au moins pour participer à la sustentation du giravion hybride, le giravion hybride ayant un système propulsif ayant au moins un rotor propulsif muni d'une pluralité de deuxièmes pales ayant un deuxième pas variable au moins pour participer à l'avancement du giravion hybride, ledit giravion hybride ayant une installation motrice pourvue d'au moins un moteur fonctionnant selon au moins un régime pour mettre en rotation ledit rotor de sustentation et chaque rotor propulsif dudit au moins un rotor propulsif, ledit au moins un régime étant associé à au moins une limite pour au moins un paramètre de surveillance de l'installation motrice

Ce giravion hybride comporte un calculateur embarqué et un indicateur configuré pour appliquer le procédé décrit précédemment.

L'invention et ses avantages apparaîtront avec plus de détails dans le cadre de la description qui suit avec des exemples donnés à titre illustratif en référence aux figures annexées qui représentent :
- la figure 1, la figure 1, une vue isométrique d'un giravion hybride,
- la figure 2, la figure 2, un schéma montrant un dispositif d'aide au pilotage d'un tel giravion hybride,
- les figures 3 à 6, des figures illustrant le procédé selon l'invention.

Les éléments présents dans plusieurs figures distinctes sont affectés d'une seule et même référence.

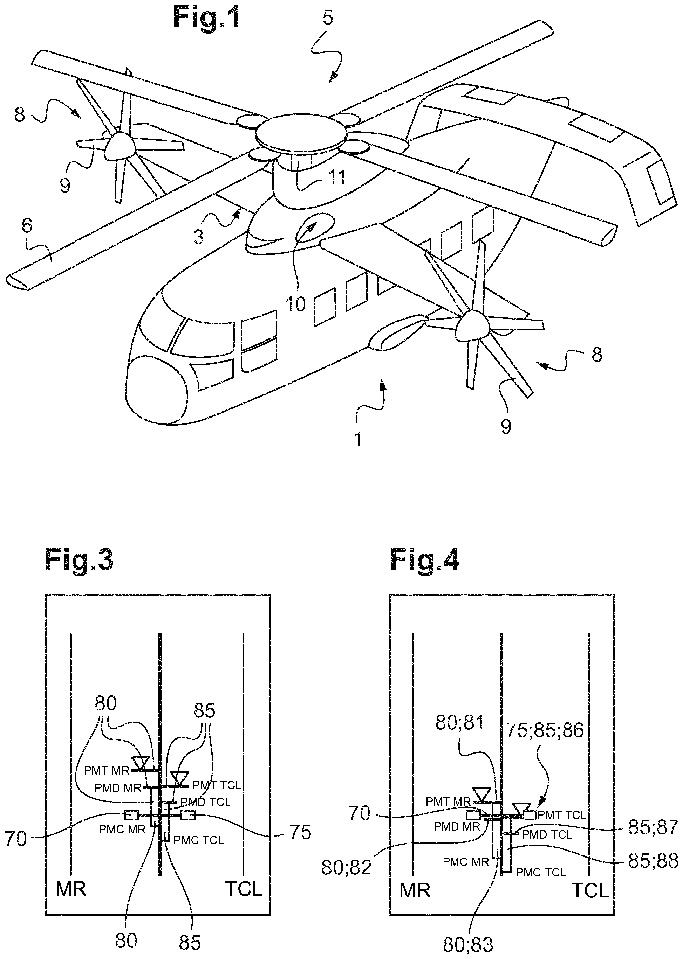

La figure 1 présente un giravion hybride 1 selon l'invention pourvu d'un rotor de sustentation 5 comprenant une pluralité de premières pales 6 ayant un premier pas collectif variable. Ce giravion hybride 1 est de plus muni d'un système propulsif 7. Le système propulsif 7 inclut au moins un rotor propulsif 8, par exemple de type hélice, comprenant une pluralité de deuxièmes pales 9 ayant un deuxième pas collectif variable.

Par exemple, le giravion hybride 1 comprend un fuselage 2 portant au moins une voilure tournante, la voilure tournante comportant le rotor de sustentation portant des premières pales 6. De plus, le giravion hybride inclut un premier rotor propulsif et un deuxième rotor propulsif. Par exemple, les deux rotors propulsifs 8 sont des rotors latéraux éventuellement disposés à chaque extrémité externe d'une aile 3.

Pour mettre en rotation le rotor de sustentation et chaque rotor propulsif 8, l'aéronef inclut une installation motrice munie d'au moins un moteur 10 par exemple de type turbomoteur. De plus, l'installation motrice peut comprendre un système d'interconnexion 11 incluant au moins une boîte de transmission de puissance, au moins un arbre de transmission..

Les vitesses de rotation des arbres de sortie des moteurs 10, des rotors propulsifs 8, du rotor de sustentation 5 et du système mécanique d'interconnexion 11 sont éventuellement proportionnelles entre elles, le rapport de proportionnalité étant variable ou constant quelle que soit la configuration de vol du giravion hybride en conditions normales de fonctionnement de la chaîne cinématique intégrée.

En outre, chaque moteur 10 fonctionne selon une enveloppe de fonctionnement incluant un ou plusieurs régimes comprenant par exemple un régime de décollage définissant une puissance maximale au décollage PMD, un régime maximal continu définissant une puissance maximale en continu PMC, un régime transitoire définissant une puissance maximale en transitoire PMT, un premier régime d'urgence définissant une puissance de super urgence PSU, un deuxième régime d'urgence définissant une puissance maximale d'urgence PMU et/ou un troisième régime d'urgence définissant une puissance intermédiaire d'urgence PIU.

Pour contrôler le giravion hybride, le pilote peut disposer d'une commande de poussée TCL permettant de modifier le pas moyen des deuxièmes pales des rotors propulsifs 8.

Plus précisément, la commande de poussée agit de manière identique sur les pas des deuxièmes pales 9 afin d'obtenir une variation collective du pas des deuxièmes pales. Par exemple, le pilote va requérir une augmentation de 5 degrés du pas moyen de l'ensemble des pales des rotors propulsifs pour augmenter la poussée résultante générée notamment par le premier rotor propulsif et le deuxième rotor propulsif, le pas moyen des pales des premier et deuxième rotors propulsifs étant éventuellement égal à la demi-somme des premier et deuxième pas des pales des deux rotors propulsifs.

La commande de poussée peut comprendre un levier agissant sur une chaine cinématique reliée aux deuxièmes pales des rotors propulsifs.

De manière alternative ou complémentaire, la commande de poussée est éventuellement pourvue d'un bouton apte à commander au moins un vérin disposé sur ladite chaîne cinématique. Ce bouton possède avantageusement trois positions, à savoir une première position requérant une augmentation du pas moyen des pales des rotors propulsifs, et donc une variation collective et de la même quantité des pas des deuxièmes pales 9, une deuxième position requérant une diminution du pas des deuxièmes pales 9 et enfin une troisième position ne requérant pas une modification du pas des deuxièmes pales 9.

Pour contrôler l'attitude en lacet du giravion hybride, le pilote peut disposer d'un dispositif de commande en lacet muni d'un moyen de commande en lacet, classiquement un palonnier, pour engendrer une variation non plus collective mais différente voire différentielle des pas des deuxièmes pales 9.

Enfin, le giravion hybride 1 est muni de moyens de commande usuels pour contrôler collectivement et cycliquement le pas des premières pales 6 du rotor de sustentation 5.

Afin d'éviter d'être confronté à des manœuvres susceptibles de mettre en péril l'aéronef, cet aéronef est muni d'un dispositif d'aide au pilotage.

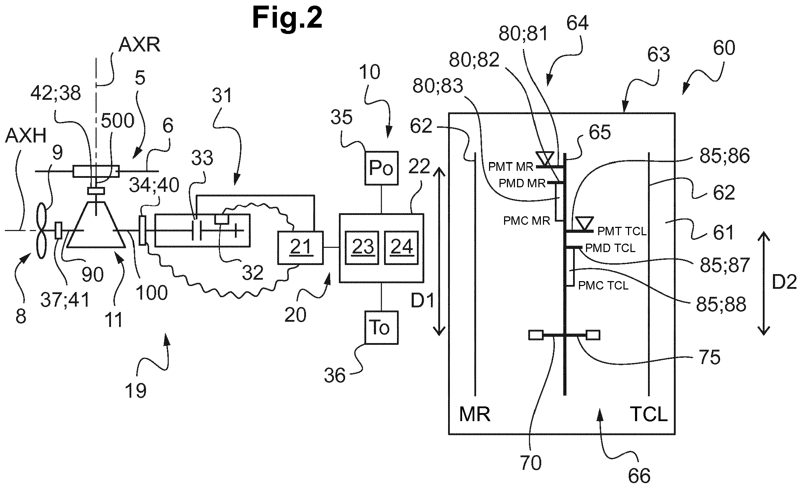

La figure 2 présente un tel dispositif d'aide au pilotage 15 conforme à l'invention.

Ce dispositif d'aide au pilotage 15 comprend un calculateur embarqué 20.

Le calculateur embarqué 20 peut comprendre un ou plusieurs calculateurs communiquant ensembles.

De plus, le dispositif d'aide au pilotage 15 comporte un indicateur 60 piloté par le calculateur embarqué ainsi qu'une pluralité de capteurs 30 reliés au calculateur embarqué.

Selon l'exemple représenté, le calculateur embarqué 20 comporte un calculateur central 22 et un calculateur moteur 21 usuel par moteur.

Un tel calculateur moteur est par exemple du type d'un calculateur d'un système connu sous l'acronyme FADEC. Chaque calculateur moteur est alors relié à au moins un capteur moteur. Un tel calculateur moteur peut réguler un moteur thermique en contrôlant son doseur de carburant par exemple ou un moteur électrique. Un tel calculateur moteur peut en outre délivrer pour chaque régime de fonctionnement la marge de puissance disponible pour ce moteur par rapport à la puissance maximale à ce régime et peut délivrer une valeur d'une puissance courante consommée par ce moteur.

Selon un autre exemple, un unique calculateur est par exemple employé.

Chaque calculateur peut comprendre par exemple au moins un processeur 23 et au moins une mémoire 24, au moins un circuit intégré, au moins un système programmable, au moins un circuit logique, ces exemples ne limitant pas la portée donnée à l'expression « calculateur ».

Dès lors, le calculateur embarqué 20 est relié par des connections filaires ou non filaires à des capteurs 31 de mesure de paramètres de surveillance de chaque moteur 10. Par exemple, chaque calculateur moteur 21 est relié à un jeu de capteurs moteur. Les paramètres de surveillance d'un moteur peuvent inclure au moins un paramètre à choisir dans une liste incluant la vitesse de rotation Ng d'un générateur de gaz de chaque moteur, le couple TQ de chaque moteur et une température des gaz par exemple la température des gaz T45 à l'entrée d'une turbine libre basse pression de chaque moteur.

Dès lors, pour chaque moteur le dispositif d'aide au pilotage 15 possède un capteur 32 de mesure de la vitesse de rotation Ng du moteur, un couplemètre 34 de mesure du couple TQ développé par le moteur sur un arbre de sortie moteur 100 entraîné par ce moteur, et un capteur 33 de mesure de la température des gaz T45 du moteur. Un capteur de vitesse de rotation moteur 40 peut mesurer la vitesse de rotation de l'arbre de sortie moteur.

Par ailleurs, le dispositif d'aide au pilotage 15 peut comprendre un senseur 35 de la pression extérieure P0 et un senseur 36 de la température extérieure T0 qui sont reliés au calculateur embarqué 20, et par exemple au calculateur central 22.

Par ailleurs, le calculateur embarqué 20 et par exemple le calculateur central peut être relié à un couplemètre de rotor propulsif 37 par rotor propulsif. Chaque couplemètre de rotor propulsif 37 peut mesurer un couple sur un arbre de rotor propulsif 90 entrainant en rotation le rotor propulsif autour de son axe de rotation AXH. Un capteur de vitesse de rotation de rotor propulsif 41 peut mesurer la vitesse de rotation de l'arbre de rotor propulsif.

Le calculateur embarqué 20 et par exemple le calculateur central peut être relié à un couplemètre rotor 38. Le couplemètre rotor peut mesurer un couple sur un arbre rotor 500 entrainant en rotation le rotor de sustentation 5 autour de son axe de rotation AXR. Un capteur de vitesse de rotation rotor 42 peut mesurer la vitesse de rotation de l'arbre rotor 500.

Le calculateur embarqué 20 et par exemple le calculateur central peut être relié à un capteur de pas moyen mesurant le pas moyen actuel des pales de rotor propulsif et/ou à un capteur de vitesse air apte à mesurer la vitesse air vraie de l'hélicoptère hybride et/ou un capteur de vitesse de rotation mesurant la vitesse de rotation des rotors propulsifs et/ou un capteur de vitesse de rotation mesurant la vitesse de rotation du rotor de sustentation et/ou un capteur de pas mesurant le pas collectif des pales du rotor de sustentation.

Selon le procédé de l'invention mis en œuvre par ce dispositif 10, pour au moins un régime de fonctionnement des moteurs dénommé par commodité « régime surveillé », le calculateur embarqué 20 détermine une première marge de puissance MRGPROT par rapport à la puissance maximale MAXP pouvant être développée à ce régime.

Par exemple, le calculateur embarqué détermine pour chaque moteur une marge de couple moteur qui correspond à la marge de puissance du moteur traduite en unité de couple mécanique.

Eventuellement, chaque régime spécifie une limite mémorisée à ne pas dépasser pour chaque paramètre de surveillance. Dès lors, le calculateur moteur d'un moteur détermine la marge dite « marge de surveillance » entre une valeur courante de chaque paramètre de surveillance et sa limite. Le cas échéant la marge de surveillance est convertie par le calculateur moteur en une marge de contrôle exprimée en unité de couple moteur via des lois mémorisées ou équivalents.

Par exemple, le calculateur moteur détermine une marge de température T45 qui est convertie en une marge exprimée en unité de couple, une marge de la vitesse de rotation Ng qui est convertie en une autre marge exprimée en unité de couple, et une marge du couple moteur qui est de fait une marge exprimée en unité de couple. La marge exprimée en unité de couple la plus faible représente la marge de couple du moteur concerné.

En outre, le calculateur embarqué 20 peut calculer une marge de couple intermédiaire entre une limite mémorisée de couple rotor de l'arbre rotor 500 et le couple courant exercé sur cet arbre rotor 500.

Le calculateur embarqué 20 peut alors déterminer un minimum de marge de couple rotor qui est égal au minimum entre chaque marge de couple moteur et la marge de couple intermédiaire.

Indépendamment de cet aspect, le calculateur embarqué 20 détermine une ou plusieurs deuxièmes marges de puissance de l'installation motrice.

Le calculateur embarqué détermine alors pour chaque rotor propulsif une marge de couple dite « de calcul » entre une limite de couple de rotor propulsif mémorisée d'un arbre de rotor propulsif 90 mettant en rotation ce rotor propulsif et un couple courant exercé sur cet arbre de rotor propulsif 90 mesuré par un couplemètre de rotor propulsif 37.

Selon une première alternative une unique deuxième marge de puissance est calculée.

Dès lors, le calculateur embarqué détermine un minimum de marge de couple de rotor propulsif correspondant au minimum entre chaque marge de couple moteur et chaque marge de couple de calcul. Le calculateur embarqué détermine alors une unique deuxième marge de puissance égale au minimum de marge de couple de rotor propulsif multiplié par la vitesse de rotation d'un arbre de sortie moteur 100 mis en rotation par le moteur présentant la plus petite marge de couple.

Selon une deuxième alternative une deuxième marge de puissance par rotor propulsif est calculée.

Dès lors, le calculateur embarqué détermine pour chaque rotor propulsif un minimum de marge de couple de rotor propulsif correspondant au minimum entre chaque marge de couple moteur et la marge de couple de calcul de ce rotor propulsif. Le calculateur embarqué détermine alors une deuxième marge de puissance par rotor propulsif égale au minimum de marge de couple de rotor propulsif de ce rotor propulsif multiplié par la vitesse de rotation d'un arbre de sortie moteur mis en rotation par le moteur présentant la plus petite marge de couple.

Quelle que soit l'alternative, le calculateur embarqué et par exemple le calculateur central calcule pour chaque régime surveillé une première marge de puissance MRGPROT qui représente une réserve de puissance de l'installation motrice exploitable par le rotor de sustentation. De plus, le calculateur embarqué et par exemple la calculateur central calcule pour chaque régime surveillé au moins une deuxième marge de puissance MRGPHEL qui représente une réserve de puissance de l'installation motrice exploitable par au moins un rotor propulsif.

Dès lors, le calculateur embarqué et par exemple le calculateur central transmet au moins un signal à un indicateur 60 pour générer et afficher divers symboles sur un écran 61 de cet indicateur.

Eventuellement, le calculateur embarqué peut requérir de générer et d'afficher deux barres verticales 62 parallèles pour délimiter horizontalement une zone d'affichage 63.

De plus, le calculateur embarqué peut requérir de générer et d'afficher, le cas échéant dans la zone d'affichage 63 une ligne 65 séparant un premier côté 64 et un deuxième côté 66 de l'indicateur 60. Les informations relatives au rotor de sustentation sont par exemple affichées du premier côté 64 alors que les informations relatives aux rotors propulsifs sont affichées du deuxième côté 66. Les barres verticales peuvent déboucher sur une indication MR, TCL pour identifier visuellement ces informations.

Le calculateur embarqué peut requérir de générer et d'afficher le cas échéant dans la zone d'affichage 63 un premier index 70 dans le premier côté 64. Ce premier index 70 pointe la ligne 65 pour illustrer un point de fonctionnement courant du rotor de sustentation et par exemple la puissance consommée par le rotor de sustentation.

Eventuellement, le calculateur embarqué calcule la puissance consommée par le rotor de sustentation en multipliant le couple rotor exercé sur l'arbre rotor 500 et la vitesse de rotation de l'arbre rotor qui sont mesurés respectivement avec le couplemètre rotor 38 et le capteur de vitesse de rotation rotor. Alternativement, le calculateur embarqué calcule la puissance consommée par le rotor de sustentation à l'aide de polaires mémorisées et de paramètres du rotor de sustentation tels que le rayon des premières pales, la vitesse en bout de pales du rotor de sustentation, la vitesse air de l'aéronef, le pas des premières pales...

Le calculateur embarqué peut requérir de générer et d'afficher le cas échéant dans la zone d'affichage 63 un deuxième index 75 dans le deuxième côté 66. Ce deuxième index 75 pointe la ligne 65 pour illustrer un point de fonctionnement courant du ou des rotors propulsifs et par exemple la puissance consommée par le ou les rotors propulsifs.

Eventuellement, le calculateur embarqué peut calculer la puissance consommée par chaque rotor propulsif en multipliant le couple de rotor propulsif exercé sur l'arbre de rotor propulsif 90 et la vitesse de rotation de l'arbre de rotor propulsif 90 qui sont mesurés respectivement avec le couplemètre de rotor propulsif 37 et le capteur de vitesse de rotation de rotor propulsif 41. Alternativement, le calculateur embarqué calcule la puissance consommée par chaque rotor propulsif à l'aide de polaires mémorisées et de paramètres du rotor propulsif tels que le rayon des deuxièmes pales, la vitesse en bout de pales du rotor propulsif, la vitesse air de l'aéronef, le pas des deuxièmes pales...

Pour chaque régime surveillé, le calculateur embarqué peut requérir de générer et d'afficher dans le premier côté 64 un premier symbole 80 séparé du premier index 70 par une première distance D1 illustrant la première marge de puissance à ce régime surveillé. Selon l'exemple représenté, le calculateur embarqué peut générer un premier symbole 81 pour illustrer la première marge de puissance au régime transitoire PMT et un premier symbole 82 pour illustrer la première marge de puissance au régime de puissance étendue et un premier symbole 83 pour illustrer la première marge de puissance au régime maximal continu.

Pour chaque régime surveillé, le calculateur embarqué peut requérir de générer et d'afficher dans le deuxième côté 66 un deuxième symbole 85 séparé du deuxième index 75 par une deuxième distance D2 illustrant au moins une deuxième marge de puissance à ce régime surveillé. Selon l'exemple représenté, le calculateur embarqué peut générer un deuxième symbole 86 pour illustrer la deuxième marge de puissance la plus faible au régime transitoire PMT et un deuxième symbole 87 pour illustrer la deuxième marge de puissance la plus faible au régime de puissance étendue et un deuxième symbole 88 pour illustrer la deuxième marge de puissance la plus faible au régime maximal continu.

Selon la réalisation de la figure 2, le calculateur embarqué peut positionner le premier index 70 puis pour chaque régime surveillé décale le premier symbole 80 par rapport au premier index 70 en fonction de l'évolution de la première marge de puissance. De même, le calculateur embarqué peut positionner le deuxième index 75 puis pour chaque régime surveillé décale le deuxième symbole 85 par rapport au deuxième index 75 en fonction de l'évolution de la deuxième marge de puissance la plus faible.

Le premier index 70 et le deuxième index 75 sont fixes par rapport à la ligne 65. Par contre, les premiers symboles 80 et les deuxièmes symboles 85 sont mobiles par rapport à la ligne 65.

Eventuellement, le premier index 70 et le deuxième index 75 sont alignés et/ou sont symétriques par rapport à la ligne 65.

Par exemple et en référence à la figure 3, lorsque le pilote modifie le pas des deuxièmes pales des rotors propulsifs, les diverses marges sont réduites. Les premiers symboles et les deuxièmes symboles se déplacent selon une même direction.

La figure 4 illustre une situation où le pilote ne dispose plus de marge de puissance pour les rotors propulsifs mais peut encore disposer d'une marge de puissance pour le rotor de sustentation.

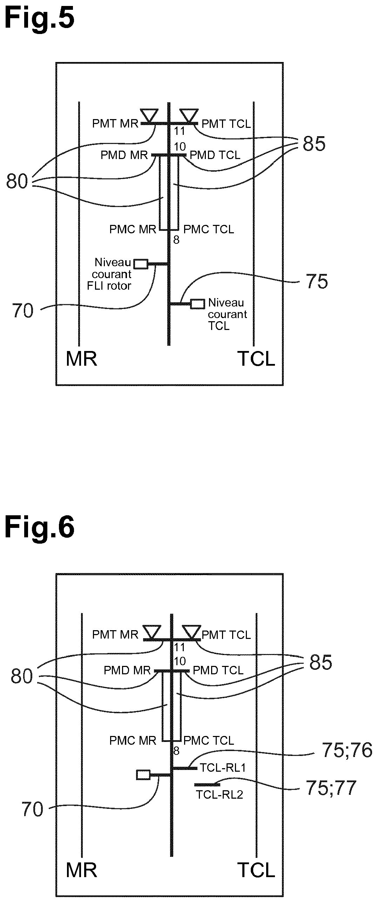

Selon la réalisation de la figure 5, le premier index 70 et le deuxième index 75 sont mobiles par rapport à la ligne 65. Par contre, les premiers symboles 80 et les deuxièmes symboles 85 sont fixes par rapport à la ligne 65.

Eventuellement, pour chaque régime surveillé le premier symbole 80 et le deuxième symbole 85 sont alignés et/ou sont symétriques par rapport à la ligne 65.

Selon la variante de la figure 6, le calculateur embarqué fait la distinction entre les rotors propulsifs.

Dès lors, le calculateur embarqué calcule une marge de rotor propulsif par rotor propulsif.

De plus, le deuxième index 75 présente un pointeur 76, 77 par rotor propulsif, chaque pointeur 76, 77 étant séparé du deuxième symbole par une distance illustrant la marge de rotor propulsif correspondante.

Naturellement, la présente invention est sujette à de nombreuses variations quant à sa mise en oeuvre, sans sortir du cadre définit par les revendications. Bien que plusieurs modes de réalisation aient été décrits, on comprend bien qu'il n'est pas concevable d'identifier de manière exhaustive tous les modes possibles.

## Revendications

1. Procédé pour faciliter le pilotage d'un giravion hybride (1), ledit giravion hybride (1) comprenant un rotor de sustentation (5) muni d'une pluralité de premières pales (6) ayant un premier pas variable au moins pour participer à la sustentation du giravion hybride (1), le giravion hybride (1) ayant un système propulsif (7) comprenant au moins un rotor propulsif (8) muni d'une pluralité de deuxièmes pales (9) ayant un deuxième pas variable au moins pour participer à l'avancement du giravion hybride (1), ledit giravion hybride (1) ayant une installation motrice pourvue d'au moins un moteur (10) fonctionnant selon au moins un régime pour mettre en rotation ledit rotor de sustentation (5) et chaque rotor propulsif (8) dudit au moins un rotor propulsif (8), ledit au moins un régime étant associé à au moins une limite pour au moins un paramètre de surveillance (T4, NG, TQ) de l'installation motrice,
**caractérisé en ce que** ledit procédé comporte les étapes de :
- pour au moins un dit régime dit régime surveillé, détermination avec un calculateur embarqué (20) d'une première marge de puissance de l'installation motrice disponible pour le rotor de sustentation et d'au moins une deuxième marge de puissance de l'installation motrice disponible pour ledit au moins un rotor propulsif,
- affichage dans un unique indicateur (60) d'une ligne (65) séparant un premier côté (64) et un deuxième côté (66) de l'indicateur (60),
- affichage dans ledit unique indicateur (60) d'un premier index (70) pointant sur ladite ligne (65) pour illustrer un point de fonctionnement courant du rotor de sustentation (5) et affichage dans ledit unique indicateur (60) d'un deuxième index (75) pointant sur ladite ligne (65) pour illustrer un point de fonctionnement courant dudit au moins un rotor propulsif (8),
- pour chaque régime surveillé, affichage sur commande dudit calculateur embarqué (20) d'un premier symbole (80) séparé du premier index (70) par une première distance (D1) illustrant la première marge de puissance (MRGPROT) à ce régime surveillé, et affichage sur commande dudit calculateur embarqué (20) d'un deuxième symbole (85) qui comprend au moins un pointeur séparé du deuxième index (75) par une deuxième distance (D2) illustrant au moins une deuxième marge de puissance (MRGPHEL) à ce régime surveillé.

2. Procédé selon la revendication 1,
caractérisé en ce ledit premier index (70) et le premier symbole (80) associés à chaque régime surveillé sont positionnés dudit premier côté (64), ledit deuxième index (75) et le deuxième symbole (85) associé à chaque régime surveillé étant positionnés dudit deuxième côté (66).

3. Procédé selon l'une quelconque des revendications 1 à 2,
**caractérisé en ce que** ladite étape de détermination d'une première marge de puissance comporte les étapes suivantes :
- détermination d'une marge de couple moteur pour chaque moteur dudit au moins un moteur,
- détermination d'une marge de couple intermédiaire entre une limite de couple rotor d'un arbre rotor (500) mettant en rotation le rotor de sustentation (5) et un couple courant exercé sur cet arbre rotor (500),
- détermination d'un minimum de marge de couple rotor correspondant au minimum entre la marge de couple moteur et la marge de couple intermédiaire,
- détermination de la première marge de puissance égale au minimum de marge de couple rotor multiplié par une vitesse de rotation d'un arbre de sortie moteur (100) mis en rotation par le moteur présentant la plus petite marge de couple.

4. Procédé selon la revendication 3,
**caractérisé en ce que** ladite étape de détermination d'une marge de couple moteur pour chaque moteur (10) comporte les étapes suivantes :
- détermination d'une marge de surveillance de chaque paramètre de surveillance du moteur entre une valeur courante de ce paramètre de surveillance et une limite prédéterminée de ce paramètre de surveillance au régime surveillé,
- pour chaque paramètre de surveillance qui n'est pas le couple moteur, transformation de la marge de surveillance en une marge exprimée en unité de couple moteur, la marge de couple moteur étant la marge exprimée en unité de couple moteur la plus faible.

5. Procédé selon l'une quelconque des revendications 3 à 4,
**caractérisé en ce que** ladite étape de détermination d'au moins une deuxième marge de puissance comporte les étapes suivantes :
- détermination d'une marge de couple moteur pour chaque moteur dudit au moins un moteur,
- détermination pour chaque rotor propulsif d'une marge de couple de calcul entre une limite de couple de rotor propulsif d'un arbre de rotor propulsif mettant en rotation ce rotor propulsif et un couple courant exercé sur cet arbre de rotor propulsif,
- détermination d'un minimum de marge de couple de rotor propulsif correspondant au minimum entre la marge de couple moteur et chaque marge de couple de calcul,
- détermination d'une unique deuxième marge de puissance égale au minimum de marge de couple de rotor propulsif multiplié par la vitesse de rotation d'un arbre de sortie moteur mis en rotation par le moteur présentant la plus petite marge de couple.

6. Procédé selon l'une quelconque des revendications 3 à 4,
**caractérisé en ce que** ladite étape de détermination d'au moins une deuxième marge de puissance comporte les étapes suivantes :
- détermination d'une marge de couple moteur pour chaque moteur dudit au moins un moteur,
- détermination pour chaque rotor propulsif d'une marge de couple de calcul entre une limite de couple de rotor propulsif d'un arbre de rotor propulsif mettant en rotation ce rotor propulsif et un couple courant exercé sur cet arbre de rotor propulsif,
- détermination pour chaque rotor propulsif d'un minimum de marge de couple de rotor propulsif correspondant au minimum entre la marge de couple moteur et la marge de couple de calcul associée à ce rotor propulsif,
- détermination d'une deuxième marge de puissance par rotor propulsif égale au minimum de marge de couple de rotor propulsif de ce rotor propulsif multiplié par la vitesse de rotation d'un arbre de sortie moteur mis en rotation par le moteur présentant la plus petite marge de couple.

7. Procédé selon l'une quelconque des revendications 1 à 6,
**caractérisé en ce que** ledit premier index (70) et ledit deuxième index (75) sont fixes par rapport à la ligne (65), ledit premier symbole (80) et ledit deuxième symbole (85) étant mobiles par rapport à la ligne (65).

8. Procédé selon la revendication 7,
**caractérisé en ce que** ledit premier index (70) et ledit deuxième index (75) sont alignés, ledit premier index (70) et ledit deuxième index (75) étant symétriques par rapport à la ligne (65)

9. Procédé selon l'une quelconque des revendications 1 à 6,
**caractérisé en ce que** ledit premier index (70) et ledit deuxième index (75) sont mobiles par rapport à la ligne (65), ledit premier symbole (80) et ledit deuxième symbole (85) étant fixes par rapport à la ligne (65).

10. Procédé selon la revendication 9,
**caractérisé en ce que** pour un même régime surveillé ledit premier symbole (80) et ledit deuxième symbole (85) sont alignés, ledit premier symbole (80) et ledit deuxième symbole (85) étant symétriques par rapport à la ligne (65).

11. Procédé selon l'une quelconque des revendications 1 à 4,
**caractérisé en ce que** ledit au moins un rotor propulsif comprenant plusieurs rotors propulsifs (8), ladite au moins une deuxième marge de puissance (MRGPHEL) inclut une marge de rotor propulsif par rotor propulsif, ledit deuxième index (75) comporte un pointeur (76, 77) par rotor propulsif séparé du deuxième symbole (85) par une deuxième distance illustrant la deuxième marge de puissance correspondante.

12. Procédé selon l'une quelconque des revendications 1 à 11,
**caractérisé en ce que** ledit premier symbole (80) et ledit deuxième symbole (85) ont des formes identiques.

13. Procédé selon l'une quelconque des revendications 1 à 12,
**caractérisé en ce que** ledit premier symbole (80) et ledit deuxième symbole (85) sont au moins temporairement dissymétriques par rapport à la ligne (65).

14. Giravion hybride (1), ledit giravion hybride (1) comprenant un rotor de sustentation (5) muni d'une pluralité de premières pales (6) ayant un premier pas variable au moins pour participer à la sustentation du giravion hybride (1), le giravion hybride ayant un système propulsif (7) comprenant au moins un rotor propulsif (8) muni d'une pluralité de deuxièmes pales (9) ayant un deuxième pas variable au moins pour participer à l'avancement du giravion hybride (1), ledit giravion hybride (1) ayant une installation motrice pourvue d'au moins un moteur (10) fonctionnant selon au moins un régime pour mettre en rotation ledit rotor de sustentation (5) et chaque rotor propulsif (8) dudit au moins un rotor propulsif, ledit au moins un régime étant associé à au moins une limite pour au moins un paramètre de surveillance de l'installation motrice **caractérisé en ce que** ledit giravion hybride (1) comporte un calculateur embarqué (20) et un indicateur (60) qui sont configurés pour appliquer le procédé selon l'une quelconque des revendications 1 à 13.

## Patentansprüche

1. Verfahren zum Erleichtern der Steuerung eines Hybrid-Drehflügelflugzeugs (1), wobei das Hybrid-Drehflügelflugzeug (1) einen Hubrotor (5) umfasst, der mit einer Mehrzahl von ersten Blättern (6) versehen ist, die eine erste variable Steigung aufweisen, um zum Hub des Hybrid-Drehflügelflugzeugs (1) wenigstens beizutragen, wobei das Hybrid-Drehflügelflugzeug (1) ein Vortriebssystem (7) aufweist, das wenigstens einen Vortriebsrotor (8) umfasst, der mit einer Mehrzahl von zweiten Blättern (9) versehen ist, die eine zweite variable Steigung aufweisen, um zum Vortrieb des Hybrid-Drehflügelflugzeugs (1) wenigstens beizutragen, wobei das Hybrid-Drehflügelflugzeug (1) ein Triebwerk aufweist, das mit mindestens einem Motor (10) versehen ist, der unter mindestens einem Regime zum Drehen des Hubrotors (5) und jedes Vortriebsrotors (8) des mindestens einen Vortriebsrotors (8) arbeitet, wobei das mindestens eine Regime mit mindestens einem Grenzwert für mindestens einen Überwachungsparameter (T4, NG, TQ) des Triebwerks verknüpft ist,
**dadurch gekennzeichnet, dass** das Verfahren die folgenden Schritte umfasst:
- für mindestens eines der Regimes, als überwachtes Regime bezeichnet, Bestimmen, mittels eines Bordcomputers (20), eines ersten Leistungsspielraums des Triebwerks, der für den Hubrotor verfügbar ist, und mindestens eines zweiten Leistungsspielraums des Triebwerks, der für den mindestens einen Vortriebsrotor verfügbar ist,
- Anzeigen, in einem einzigen Anzeigeelement (60), einer Linie (65), die eine erste Seite (64) und eine zweite Seite (66) des Anzeigeelements (60) trennt,
- Anzeigen, in dem einzigen Anzeigeelement (60), eines ersten Index (70), der auf die Linie (65) zeigt, um einen aktuellen Arbeitspunkt des Hubrotors (5) zu veranschaulichen, und Anzeigen, in dem einzigen Anzeigeelement (60), eines zweiten Index (75), der auf die Linie (65) zeigt, um einen aktuellen Betriebspunkt des mindestens einen Vortriebsrotors (8) zu veranschaulichen,
- für jedes überwachte Regime, Anzeigen, auf Befehl des Bordcomputers (20), eines ersten Symbols (80), das von dem ersten Index (70) durch einen ersten Abstand (D1) getrennt ist, der den ersten Leistungsspielraum (MRGPROT) in diesem überwachten Regime veranschaulicht, und Anzeigen, auf Befehl des Bordcomputers (20), eines zweiten Symbols (85), das mindestens einen Zeiger umfasst, der von dem zweiten Index (75) durch einen zweiten Abstand (D2) getrennt ist, der mindestens einen zweiten Leistungsspielraum (MRGPHEL) in diesem überwachten Regime veranschaulicht.

2. Verfahren nach Anspruch 1,
**dadurch gekennzeichnet, dass** der erste Index (70) und das erste Symbol (80), die jedem überwachten Regime zugeordnet sind, auf der ersten Seite (64) angeordnet sind, und dass der zweite Index (75) und das zweite Symbol (85), das jedem überwachten Regime zugeordnet ist, auf der zweiten Seite (66) angeordnet sind.

3. Verfahren nach einem der Ansprüche 1 bis 2,
**dadurch gekennzeichnet, dass** der Schritt des Bestimmens eines ersten Leistungsspielraums die folgenden Schritte umfasst:
- Bestimmen eines Motordrehmomentspielraums für jeden Motor des mindestens einen Motors,
- Bestimmen eines intermediären Drehmomentspielraums zwischen einer Rotordrehmomentgrenze einer den Hubrotor (5) drehenden Rotorwelle (500) und einem aktuell auf diese Rotorwelle (500) ausgeübten Drehmoment,
- Bestimmen eines minimalen Rotordrehmomentspielraums, der dem Minimum zwischen dem Motordrehmomentspielraum und dem intermediären Drehmomentspielraum entspricht,
- Bestimmen des ersten Leistungsspielraums gleich dem minimalen Rotor-Drehmomentspielraum multipliziert mit einer Drehzahl einer Motorausgangswelle (100), die von dem Motor mit dem kleinsten Drehmomentspielraum gedreht wird.

4. Verfahren nach Anspruch 3,
**dadurch gekennzeichnet, dass** der Schritt des Bestimmens eines Motordrehmomentspielraums für jeden Motor (10) die folgenden Schritte umfasst:
- Bestimmen eines Überwachungsspielraums für jeden Überwachungsparameter des Motors zwischen einem aktuellen Wert dieses Überwachungsparameters und einem vorgegebenen Grenzwert dieses Überwachungsparameters im überwachten Regime,
- für jeden Überwachungsparameter, bei dem es sich nicht um das Motordrehmoment handelt, Umwandeln des Überwachungsspielraums in einen in Einheiten des Motordrehmoments ausgedrückten Spielraum, wobei der Motordrehmomentspielraum der niedrigste in Einheiten des Motordrehmoments ausgedrückte Spielraum ist.

5. Verfahren nach einem der Ansprüche 3 bis 4,
**dadurch gekennzeichnet, dass** der Schritt des Bestimmens mindestens eines zweiten Leistungsspielraums die folgenden Schritte umfasst:
- Bestimmen eines Motordrehmomentspielraums für jeden Motor des mindestens einen Motors,
- Bestimmen eines Berechnungsdrehmomentspielraums für jeden Vortriebsrotor zwischen einer Vortriebsrotor-Drehmomentgrenze einer Vortriebsrotorwelle, die diesen Vortriebsrotor dreht, und einem aktuell auf diese Vortriebsrotorwelle ausgeübten Drehmoment,
Bestimmen eines minimalen Vortriebsrotor-Drehmomentspielraums, der dem Minimum zwischen dem Vortriebsdrehmomentspielraum und jedem Berechnungsdrehmomentspielraum entspricht,
- Bestimmen eines einzelnen zweiten Leistungsspielraums, der gleich dem minimalen Vortriebsrotor-Drehmomentspielraum multipliziert mit der Drehzahl einer Motorausgangswelle ist, die von dem Motor mit dem kleinsten Drehmomentspielraum gedreht wird.

6. Verfahren nach einem der Ansprüche 3 bis 4,
**dadurch gekennzeichnet, dass** der Schritt des Bestimmens mindestens eines zweiten Leistungsspielraums die folgenden Schritte umfasst:
- Bestimmen eines Motordrehmomentspielraums für jeden Motor des mindestens einen Motors,
- Bestimmen eines Berechnungsdrehmomentspielraums für jeden Vortriebsrotor zwischen einer Vortriebsrotor-Drehmomentgrenze einer Vortriebsrotorwelle, die diesen Vortriebsrotor dreht, und einem aktuell auf diese Vortriebsrotorwelle ausgeübten Drehmoment,
Bestimmen, für jeden Vortriebsrotor, eines minimalen Vortriebsrotor-Drehmomentspielraums, der dem Minimum zwischen dem Vortriebsdrehmomentspielraum und dem diesem Vortriebsrotor zugeordneten Berechnungsdrehmomentspielraum entspricht,
Bestimmen eines zweiten Leistungsspielraums pro Vortriebsrotor, der gleich dem minimalen Vortriebsrotor-Drehmomentspielraum dieses Vortriebsrotors multipliziert mit der Drehzahl einer Motorausgangswelle ist, die von dem Motor mit dem kleinsten Drehmomentspielraum gedreht wird.

7. Verfahren nach einem der Ansprüche 1 bis 6,
**dadurch gekennzeichnet, dass** der erste Index (70) und der zweite Index (75) in Bezug auf die Linie (65) fest sind, während das erste Symbol (80) und das zweite Symbol (85) in Bezug auf die Linie (65) beweglich sind.

8. Verfahren nach Anspruch 7,
**dadurch gekennzeichnet, dass** der erste Index (70) und der zweite Index (75) zueinander ausgerichtet sind, wobei der erste Index (70) und der zweite Index (75) symmetrisch in Bezug auf die Linie (65) sind.

9. Verfahren nach einem der Ansprüche 1 bis 6,
**dadurch gekennzeichnet, dass** der erste Index (70) und der zweite Index (75) relativ zu der Linie (65) beweglich sind, während das erste Symbol (80) und das zweite Symbol (85) relativ zu der Linie (65) fest sind.

10. Verfahren nach Anspruch 9,
**dadurch gekennzeichnet, dass** für ein gleiches überwachtes Regime das erste Symbol (80) und das zweite Symbol (85) ausgerichtet sind, wobei das erste Symbol (80) und das zweite Symbol (85) symmetrisch in Bezug auf die Linie (65) sind.

11. Verfahren nach einem der Ansprüche 1 bis 4,
**dadurch gekennzeichnet, dass** der mindestens eine Vortriebsrotor eine Mehrzahl von Vortriebsrotoren (8) umfasst, der mindestens eine zweite Leistungsspielraum (MRGPHEL) einen Vortriebsrotor-Spielraum pro Vortriebsrotor umfasst, und der zweite Index (75) einen Zeiger (76, 77) pro Vortriebsrotor aufweist, der von dem zweiten Symbol (85) durch einen zweiten Abstand getrennt ist, der den entsprechenden zweiten Leistungsspielraum darstellt.

12. Verfahren nach einem der Ansprüche 1 bis 11,
**dadurch gekennzeichnet, dass** das erste Symbol (80) und das zweite Symbol (85) identische Formen haben.

13. Verfahren nach einem der Ansprüche 1 bis 12,
**dadurch gekennzeichnet, dass** das erste Symbol (80) und das zweite Symbol (85) zumindest zeitweise asymmetrisch in Bezug auf die Linie (65) sind.

14. Hybrid-Drehflügelflugzeug (1), wobei das Hybrid-Drehflügelflugzeug (1) einen Hubrotor (5) aufweist, der mit einer Mehrzahl von ersten Blättern (6) versehen ist, die eine erste variable Steigung aufweisen, um zum Hub des Hybrid-Drehflügelflugzeugs (1) mindestens beizutragen, wobei das Hybrid-Drehflügelflugzeug ein Vortriebssystem (7) aufweist, das mindestens einen Vortriebsrotor (8) umfasst, der mit einer Mehrzahl von zweiten Blättern (9) versehen ist, die eine zweite variable Steigung aufweisen, um zu der Vorwärtsbewegung des Hybrid-Drehflügelflugzeugs (1) zumindest beizutragen, wobei das Hybrid-Drehflügelflugzeug (1) ein Triebwerk hat, das mit mindestens einem Motor (10) versehen ist, der unter mindestens einem Regime arbeitet, um den Hubrotor (5) und jeden Vortriebsrotor (8) des mindestens einen Vortriebsrotors zu drehen, wobei das mindestens eine Regime mit mindestens einem Grenzwert für mindestens einen Überwachungsparameter des Triebwerks verknüpft ist, **dadurch gekennzeichnet, dass** das Hybrid-Drehflügelflugzeug (1) einen Bordcomputer (20) und ein Anzeigeelement (60) umfasst, die konfiguriert sind, um das Verfahren nach einem der Ansprüche 1 bis 13 auszuführen.

## Claims

1. Method for facilitating the steering of a hybrid rotorcraft (1), said hybrid rotorcraft (1) including a lift rotor (5) provided with a plurality of first blades (6) having a first variable pitch at least for contributing to the lift of the hybrid rotorcraft (1), the hybrid rotorcraft (1) having a propulsion system (7) comprising at least one propulsion rotor (8) provided with a plurality of second blades (9) having a second variable pitch at least for contributing to the propulsion of the hybrid rotorcraft (1), said hybrid rotorcraft (1) having a powerplant provided with at least one engine (10) that operates at at least one speed for rotating said lift rotor (5) and each propulsion rotor (8) of said at least one propulsion rotor (8), said at least one speed being associated with at least one limit for at least one monitoring parameter (T4, NG, TQ) of the powerplant, **characterised in that** that said method comprises the steps of:
- for at least one said speed, known as the monitored speed, determining, by means of an on-board computer (20), a first power margin of the powerplant available for the lift rotor and at least a second power margin of the powerplant available for said at least one propulsion rotor,
- displaying, in a single indicator (60), a line (65) separating a first side (64) and a second side (66) of the indicator (60),
- displaying, in said single indicator (60), a first index (70) pointing to said line (65) to illustrate a current operating point of the lift rotor (5) and displaying, in said single indicator (60), a second index (75) pointing to said line (65) to illustrate a current operating point of said at least one propulsion rotor (8), and
- for each monitored speed, displaying, on command from said on-board computer (20), a first symbol (80) separated from the first index (70) by a first distance (D1) illustrating the first power margin (MRGPROT) at this monitored speed, and displaying, on command from said on-board computer (20), a second symbol (85) which includes at least one pointer separated from the second index (75) by a second distance (D2) illustrating at least a second power margin (MRGPHEL) at this monitored speed.

2. Method according to claim 1, **characterised in that** said first index (70) and the first symbol (80) that are associated with each monitored speed are positioned on said first side (64), said second index (75) and the second symbol (85) that is associated with each monitored speed being positioned on said second side (66).

3. Method according to either claim 1 or claim 2, **characterised in that** said step of determining a first power margin comprises the following steps:
- determining an engine torque margin for each engine of said at least one engine,
- determining an intermediate torque margin between a rotor torque limit of a rotor shaft (500) rotating the lift rotor (5) and a current torque exerted on this rotor shaft (500),
- determining a minimum rotor torque margin corresponding to the minimum from among the engine torque margin and the intermediate torque margin, and
- determining the first power margin equal to the minimum rotor torque margin multiplied by a rotational speed of a motor output shaft (100) rotated by the engine having the smallest torque margin.

4. Method according to claim 3, **characterised in that** said step of determining an engine torque margin for each engine (10) comprises the following steps:
- determining a monitoring margin for each monitoring parameter of the engine between a current value of this monitoring parameter and a predetermined limit of this monitoring parameter at the monitored speed, and
- for each monitoring parameter which is not the engine torque, transforming the monitoring margin into a margin expressed in engine torque units, the engine torque margin being the smallest margin expressed in engine torque units.

5. Method according to either claim 3 or claim 4, **characterised in that** said step of determining at least a second power margin comprises the following steps:
- determining an engine torque margin for each engine of said at least one engine,
- determining, for each propulsion rotor, a calculation torque margin between a propulsion rotor torque limit of a propulsion rotor shaft rotating this propulsion rotor and a current torque exerted on this propulsion rotor shaft,
- determining a minimum propulsion rotor torque margin corresponding to the minimum from among the engine torque margin and each calculation torque margin, and
- determining a single second power margin equal to the minimum propulsion rotor torque margin multiplied by the rotational speed of a motor output shaft rotated by the motor having the smallest torque margin.

6. Method according to either claim 3 or claim 4, **characterised in that** said step of determining at least a second power margin comprises the following steps:
- determining an engine torque margin for each engine of said at least one engine,
- determining, for each propulsion rotor, a calculation torque margin between a propulsion rotor torque limit of a propulsion rotor shaft rotating this propulsion rotor and a current torque exerted on this propulsion rotor shaft,
- determining, for each propulsion rotor, a minimum propulsion rotor torque margin corresponding to the minimum from among the engine torque margin and the calculation torque margin that is associated with this propulsion rotor, and
- determining a second power margin for each propulsion rotor equal to the minimum propulsion rotor torque margin of this propulsion rotor multiplied by the rotational speed of a motor output shaft rotated by the motor having the smallest torque margin.

7. Method according to any of claims 1 to 6, **characterised in that** said first index (70) and said second index (75) are stationary with respect to the line (65), said first symbol (80) and said second symbol (85) being movable with respect to line (65).

8. Method according to claim 7, **characterised in that** said first index (70) and said second index (75) are aligned, said first index (70) and said second index (75) being symmetrical with respect to the line (65)

9. Method according to any of claims 1 to 6, **characterised in that** said first index (70) and said second index (75) are movable with respect to the line (65), said first symbol (80) and said second symbol (85) being stationary with respect to line (65).

10. Method according to claim 9, **characterised in that**, for the same monitored speed, said first symbol (80) and said second symbol (85) are aligned, said first symbol (80) and said second symbol (85) being symmetrical with respect to the line (65).

11. Method according to any of claims 1 to 4, **characterised in that**, said at least one propulsion rotor including a plurality of propulsion rotors (8), said at least a second power margin (MRGPHEL) includes a propulsion rotor margin for each propulsion rotor, said second index (75) comprises a pointer (76, 77) for each propulsion rotor, which pointer is separated from the second symbol (85) by a second distance illustrating the corresponding second power margin.

12. Method according to any of claims 1 to 11, **characterised in that** said first symbol (80) and said second symbol (85) have identical shapes.

13. Method according to any of claims 1 to 12, **characterised in that** said first symbol (80) and said second symbol (85) are at least temporarily asymmetric with respect to the line (65).

14. Hybrid rotorcraft (1), said hybrid rotorcraft (1) including a lift rotor (5) provided with a plurality of first blades (6) having a first variable pitch at least for contributing to the lift of the hybrid rotorcraft (1), the hybrid rotorcraft having a propulsion system (7) comprising at least one propulsion rotor (8) provided with a plurality of second blades (9) having a second variable pitch at least for contributing to the propulsion of the hybrid rotorcraft (1), said hybrid rotorcraft (1) having a powerplant provided with at least one engine (10) that operates at at least one speed for rotating said lift rotor (5) and each propulsion rotor (8) of said at least one propulsion rotor, said at least one speed being associated with at least one limit for at least one monitoring parameter of the powerplant, **characterised in that** said hybrid rotorcraft (1) comprises an on-board computer (20) and an indicator (60) which are configured to apply the method according to any of claims 1 to 13.
